Europäisches Patentamt

European Patent Office

Office européen des brevets

(19)

(11) Publication number: **0 107 354**
**B1**

(12) **EUROPEAN PATENT SPECIFICATION**

(45) Date of publication of patent specification: **30.03.88**

(21) Application number: **83305674.0**

(22) Date of filing: **23.09.83**

(51) Int. Cl.⁴: **C 09 G 1/02, C 09 G 1/12**

(54) **Improved polish composition.**

(30) Priority: **24.09.82 US 422666**

(43) Date of publication of application:
**02.05.84 Bulletin 84/18**

(45) Publication of the grant of the patent:
**30.03.88 Bulletin 88/13**

(84) Designated Contracting States:
**AT BE CH DE FR GB IT LI LU NL SE**

(56) References cited:
**EP-A-0 042 281**
**FR-A-2 075 517**
**US-A-3 393 078**
**US-A-4 013 475**

**CHEMICAL ABSTRACTS, vol. 95, 1981, page 108, no. 64165b, Columbus, Ohio, USA**

(73) Proprietor: **UNION CARBIDE CORPORATION**
**39 Old Ridgebury Road**
**Danbury Connecticut 06817 (US)**

(72) Inventor: **Frost, Albert Carl**
**73 New York Avenue**
**Congers New York 10920 (US)**
Inventor: **Gioffre, Anthony Joseph**
**51, Bennetts Farm Road**
**Ridgefield Connecticut 06877 (US)**
Inventor: **Manchanda, Kirshan Dayal**
**63, Judith Drive**
**Danbury Connecticut 06810 (US)**

(74) Representative: **McCall, John Douglas et al**
**W.P. THOMPSON & CO. Coopers Building**
**Church Street**
**Liverpool L1 3AB (GB)**

Courier Press, Leamington Spa, England.

# 0 107 354

## Description

The present invention relates to improved polishing compositions wherein the amount of silicon-derived compound required therein to provide a given gloss and uniformity is decreased by the use of a specific aluminosilicate therewith.

The instant invention relates to improved polish compositions which employ smaller amounts of the costly silicon compounds normally found in said polishes while having properties characteristic of polish compositions containing greater amounts of said silicon compounds.

It is well known in the art to provide polish compositions containing wax and/or silicon compounds therein. In recent years the development in the area of polish compositions has in large part been directed to the development of detergent resistant polishes and for this purpose a vast number of silicon-based compositions have been developed. For example, see: U.S. Patent Nos. 3,544,498; 3,668,229; 3,576,779; 3,814,710; 4,218,240; 3,856,533. Essential features of such polishes are derived from the use of the wax and/or a silicon-derived component. These components provide important properties and functions to the polish composition. Such properties include the appearance (gloss) of the polished article, durability of the polished surface to water and detergent, and uniformity, that is, the evenness of the application of the polish composition to the article being treated. In view of the desirability that such properties be provided by any commercial polish composition, it is necessary to add wax and/or silicon-based compositions to such polish compositions in order that the properties be provided by said compositions. Unfortunately, many of these wax and/or silicon-based compositions are extremely expensive and as a result the overall cost of the polish composition is greatly increased by their use.

Traditionally, the formulation of polish compositions has been more or less static with respect to the ingredients which are routinely added to provide the final polish composition. Certain well known components are considered to be routine additives to such polish compositions, including the addition of: abrasives; waxes, thickeners; stabilizers; and conventional silicone fluids. The inclusion of one or more of these components has generally been considered to be merely one of formulation and not intimately related to the specific characteristics of a given polish composition component as it is related to other components in the polish composition.

The use of abrasives in polish compositions is well known in the art as demonstrated by the above referred to U.S. patents. These patents disclose that the abrasive material may be most any of the heretofore disclosed abrasive materials including diatomaceous earths, Newberg chalk, amorphous silica and aluminum silicates. For example, U.S. Patent No. 3,544,498 discloses a detergent resistant silicone polish wherein an organopolysiloxane copolymer is provided as the silicon-based composition in a detergent resistant polish. The polish composition is disclosed as being capable of preparation with an abrasive conventionally employed in polish compositions, the most common of which are disclosed as being "diatomaceous, aluminum silicate, and aluminum oxide such as hydrated alumina." Further, the preferred abrasive is disclosed as a mixture of amorphous silica, aluminum silicate, and kaolin clay. This abrasive mixture is stated as providing a gloss, emulsion stability and detergent resistance for the polish which is superior to other abrasives. The aluminum silicate is present in an amount of 35% by weight of the total weight of the abrasive. In the examples an aluminum silicate is disclosed as being equatable with a diatomaceous earth or, for that matter, with the use of no abrasive at all. Thus, what is clear from a consideration of the examples of U.S. Patent No. 3,544,498 is that use of the aluminum silicate was deemed to provide no advantage over a diatomaceous earth or a kaolin clay from the standpoint of formulation of the polish composition as to the relative amounts of the expensive wax and/or silicon-based compositions employed therein.

The use of Zeolite 4A in a polishing composition formed with a specific class of amides is disclosed in Japanese Application No. 95,846/79, filed July 27, 1979 published on February 27, 1979. Conventional components for polish compositions are disclosed as being "optionally" present in the amide-based composition, including: silicone oils; waxes; and solvents. It is clear that the relationship of the abrasive material is not deemed to have any effect on the amount of any component of the polish composition.

According to the present invention there is provided a polish composition comprising a known silicon-derived compound, an aluminosilicate as abrasive material and other common additives characterised in that the aluminosilicate is selected from Zeolite A, Zeolite X, Zeolite Y and mixtures thereof.

The present invention is distinguished from the previous attempts to provide polish compositions by the use of the specific aluminosilicates as the abrasive material whereby the amount of the expensive silicon-derived compound required in the polish composition to provide a given gloss may be decreased as compared to conventional abrasive materials, the polish particularly providing acceptable gloss and uniformity.

Further, the selection of the crystalline aluminosilicate is preferably correlated to the selection of the silicon-derived compound such that the amount of the silicon-derived compound is the minimum effective amount required and is less than the amount required when conventional abrasives are employed (e.g., a diatomite or a kaolin) as the abrasive material in said polish composition, while the gloss and uniformity provided by the polish composition are maintained.

It has been found that by the use of Zeolite A, Zeolite X, Zeolite Y and mixtures thereof as the abrasive in conjunction with silicon-derived compounds that the amount of silicon-derived compound employed

2

may be substantially reduced. Further, it has been found that by correlating the selection of the aluminosilicate abrasive to the selection of the silicon-derived compound to be employed therewith that the overall amount of said silicon-derived compound employed therein may be substantially minimized. The chemical and physical properties of Zeolites A, X and Y are set forth in *Zeolite Molecular Sieves,* by Donald W. Breck, Wiley-Interscience Publication (1974), at pages 83 to 107, 134, 176 and 177, said pages being incorporated herein be reference therto. In particular, it has been observed that aluminosilicates which are especially well suited for use in such polish compositions are Zeolites 13X and 4A.

The exact characteristics of a given aluminosilicate which provide for the decrease in the amount of the silicon-derived compound in the polish compositions of this invention, e.g., as compared with that amount required when a diatomite or kaolin are used, are not completely understood. It is believed that a relationship between the hydrophillic nature of certain aluminosilicates and their pore size in relation to the selected silicon-derived compound is, at least in part, responsible for the significant decrease in the amount of the silicon-derived compound required in the polish compositions. Further, an aluminosilicate having a hydrophillicity, i.e., a selectivity or capacity for water (greater than 10 weight percent for an anhydrous aluminosilicate and preferably at least as great as that possessed by zeolite 4A) is believed generally employable herein as the aluminosilicate. Zeolites 4A and 13X are particularly preferred as the abrasives employable herein. Further, such aluminosilicates are believed to provide a necessary balance between the amount of silicon-derived compound absorbed by the abrasive component and that which is not absorbed, i.e., that which is present in the bulk polish composition.

Although the exact nature of the aluminosilicate is not clearly understood in terms of all the physical and chemical charateristics which provide for the resulting decrease in the amount of the silicon-derived compound required, it is believed that the aluminosilicate should be selected such that the nominal pore diameter is less than the average kinetic diameter of the silicon-derived compound. Aluminosilicates which are believed to be particularly well suited for use in the instant invention are those aluminosilicates characterized as having a nominal pore diameter of about 7.5 Angstroms or less.

The polish compositions of this invention may contain as components the conventionally employed components including: waxes; thickeners; emulsifiers; stabilizers; and the like.

Any of the waxes employed heretofore in polish compositions may be employed herein, including: vegetable waxes such as carnuba, bayberry, and sugar cane, candellilla and ouricury; animal waxes such as beeswax; mineral waxes such as ozacerite, ceresin, and montan; and synthetic waxes such as ozokerite, polyethylene waxes and paraffin waxes including microcrystalline and oxidized paraffins, hydrogenated castor oil, polyolether-esters, chlorinated naphthalenes, etc. The wax is generally present on the polish composition in an amount between 0 and about 20% by weight based on the weight of the polish composition, and preferably between about 1 and about 10% by weight.

The "silicon-derived compound" employed in the polish compositions herein can only be any of the silicon-derived compounds routinely employed in such polish compositions. These include: derivatized silicone oils such as dialkylsilicones (e.g., dimethylsilicone); the aminofunctional silicone fluids, such as described in U.S. Patent No. 3,960,575, at column 2 line 36 to column 4 line 1, which disclosure is incorporated herein by reference thereto; and the silicon compounds disclosed in U.S. Patent No. 3,576,779, at column 1 line 62 to column 2 line 33, which dislosure is incorporated herein by reference thereto; U.S. Patent No. 3,814,710, at column 2 line 18 to column 3 line 14, said disclosures being incorporated herein by reference thereto; U.S. Patent No. 3,668,229, at column 1 line 40 to column 5 line 43, said disclosure being incorporated herein by reference thereto; U.S. Patent No. 3,856,533, at column 2 line 3 to column 2 line 28, said disclosure being incorporated herein by reference thereto. Representative of other silicon-derived compounds employable herein are those disclosed in the following U.S. Patents, said patents being incorporated herein by reference thereto: 2,832,754 (aminopropylpolysiloxane); 2,930,809 (aminoalkylsilicon compounds); 3,341,486 (organopolysiloxanes); 3,355,424 (aminoalkylsiloxanes); 3,544,498 (organopolysiloxane copolymers); 3,890,271 (hydroxyl endblocked polydimethylsiloxane); and 4,246,029 (aminofunctional silicone fluid and an organopolysiloxane fluid), just to name a few.

The "silicon-derived compound" may be employed in an effective amount to provide a polish composition having a given gloss. The amount employed is the effective amount that provides a given gloss with the aluminosilicate and is preferably the minimum effective amount as determined by correlation of the aluminosilicate and the silicon-derived compound. The effective amount is generally an amount between 0.1 and 10% by weight, based on the weight of the total polish composition, and is more preferably employed in an amount between 0.1 and 6% by weight with amounts between about 0.1 and about 2% by weight being most preferred. Generally, the amount of silicon-derived compound may be reduced to less than about 50 percent by weight of the amount required when using comparably sized diatomites or kaolins while the gloss and uniformity of the polish composition are retained.

The aluminosilicate abrasive (Zeolite A, X, Y and mixtures thereof) is generally employed in the polish composition in an amount between 0.1 percent and 30 percent by weight, based on the total weight of the composition, and more preferably between 0.5 and 20 percent by weight and most preferably between 1 and 10 percent.

Representative of the advantage derived from the correlation of the aluminosilicates and silicon-derived compounds in such polish compositions is shown by reference to Tables I and II, set forth hereinafter, wherein the relative amounts (given as a weight percent of total composition) of the silicon-derived components are set forth for an emulsified polish composition and a solvent based composition for polish compositions employing aluminosilicates and polish compositions wherein such are not employed.

TABLE I

Emulsified Polish Composition

| Component | Abrasive: Diatomite | Abrasive: Aluminosilicate |
|---|---|---|
| Dimethyl Silicone Oils | | |
| 350 cs | 5 | 2.5 |
| 1,000 cs | 1 | 0.5 |
| Wax (Petranauba-C) | 2 | 2 |
| Mineral Spirits | | |
| (Amsco-140) | 33 | 34 |
| Oleic Acid | 2.0 | 2.0 |
| Morpholine | 1.3 | 1.3 |
| Abrasives:* | | |
| Snow Floss (6 wt. %) | | |
| Super Floss (6 wt. %) | 12 | |
| Zeolite 4A | — | 12 |
| Water | 43.7 | 45.7 |

\* "Snow Floss" and "Super Floss" are trademarks of Johns-Manville, Denver for calcined and uncalcined respectively, diatomites.

TABLE II

Solvent Based Auto Polish Compositions

| Component | Abrasive: Diatomite | Abrasives: Aluminosilicate |
|---|---|---|
| Dimethyl Silicone Oil | 10 | 5 |
| Carnauba Wax | 5 | 5 |
| Petrolite | 5 | 5 |
| Abrasives | | |
| Abrasives: | | |
| "Snow Floss" (6 wt. %) + | | |
| "Super Floss" (2 wt. %) | 8 | — |
| Zeolite 4A | — | 8 |
| Kerosene | 3 | 3 |
| Mineral Spirits | 69 | 74 |

As is clear from a consideration of Tables I and II above, the amount of silicon-derived compound employed in the polish compositions of this invention is substantially less than that employed in polish compositions containing a diatomite as the abrasive. While the polish compositions of the invention employ lesser amounts of the silicon-derived compounds they retain their excellent gloss and their uniformity; as determined by ASTM method number D 38 36-79, which method is incorporated herein by reference thereto. Although the use of a lower amount of said silicon-derived compounds may in part be related to the absorption capacity of a given abrasive, it is believed that factors other than just the absorption capacity of a given abrasive are involved in the ability of certain aluminosilicates to provide polish compositions wherein such a lower amount of the silicon-derived compound may be employed. It is believed that the external surface area of the aluminosilicate and the low organophillic character of the surface may, at least in part, account for the unique behaviour of these materials when employed as abrasives on polish compositions containing silicon-derived compounds. It is also believed that the total water capacity of a particular aluminosilicate and the affinity of the aluminosilicate for such water may be involved in the advantages derived from such aluminosilicates in the instant polish compositions.

The following examples are provided to further characterize the invention.

## Example 1

Polish compositions A and B, containing silicone oil, were prepared with identical formulations except that in Polish A the abrasive was a diatomaceous earth and in Polish B the abrasive was Zeolite 4A. The polish compositions were applied on painted automotive surfaces and removed. Polish B was observed to provide the surface with excess oil as demonstrated by residual oil after wiping (smearing) while Polish A did not provide the painted surface with such residual oil. The presence of excess residual oil indicates that Polish B contained an excess of the silicon oil over that required to form the polish composition while Polish A does not contain such an excess.

## Example 2

The reduction in the amount of the silicon-derived compound which is needed to provide a polish composition was tested by preparing several polish compositions which were identical, except that Polish C contained Snow Floss (Snow Floss is the Trademark of Johns-Manville Celite Division for a milled sized diatomaceous silica) as the abrasive. Polish E contained Kaopolite SF; (Kaopolite is the Trademark of Kaopolite Inc., Garwood, N.J., for an anhydrous aluminum silicate (kaolin)) as the abrasive, the Polish D, prepared in accordance with this invention, contained Zeolite 13X as the abrasive. The amount of silicon-derived compound in each Polish was decreased until no smearing was observed (an indication that no excess silicon-derived compound was being employed in the polish composition).

Polishes C, D and E were prepared by forming three mixtures (I, II and III) as follows, with all amounts given as weight percents of the total composition:

| MIXTURE I: | AMOUNT |
| --- | --- |
| Dimethylsilicone: 1000 centistokes: 5 centistokes | (as set forth hereinafter) |
| Olecic acid | 2.5 |
| Kerosine | 2.0 |
| Mineral Spirits | 18 |
| Amylacetate | 0.2 |

| MIXTURE II: | |
| --- | --- |
| Morpholine | 1.5 |
| Water | 16.0 |

| MIXTURE III: | |
| --- | --- |
| Abrasive | 14.0 |
| Phenol | 0.1 |
| CARBOPOL 934* | 0.2 |
| Water | Balance |

* CARBOPOL 934 is a Trademark of B. F. Goodrich for an acrylic acid derived thickener.

Mixtures I, II and III were mixed to provide Polishes C, D and E. Polish C, prepared by using Snow Floss as the abrasive, was prepared with 6 weight percent dimethylsilicone and so smearing was observed as determined in accordance with ASTM D 38 36. The smearing of Polishes D and E were compared by preparing several polishes (D—1, D—2, etc and E—1, E—2, etc.) with varying amounts of dimethylsilicone, as follows:

| Dimethyl-silicone | Polish Composition | | | | | | | |
| --- | --- | --- | --- | --- | --- | --- | --- | --- |
| | D—1 | D—2 | D—3 | D—4 | D—5 | E—1 | E—2 | E—3 |
| 1000 centistokes | 5.0 | 2.5 | 1.5 | 0.8 | 0.5 | 5.0 | 2.5 | 1.5 |
| 5 centistokes | 1.0 | 0.5 | 0.5 | 0.2 | 0.1 | 1.0 | 0.5 | 0.5 |

These polishes were observed to provide comparable uniformity. The polishes were then compared for smearing according to ASTM D 38 36 and the following results observed:

| Polish | Smearing[1] |
|--------|-------------|
| D—1 | Significant |
| D—2 | Significant |
| D—3 | Slight |
| D—4 | Slight |
| D—5 | Slight |
| E—1 | Significant |
| E—2 | Slight |
| E—3 | None |

[1] Significant > Slight > None

## Claims

1. A polish composition comprising a known silicon-derived compound, an aluminosilicate as abrasive material and other common additives characterized in that the aluminosilicate is selected from Zeolite A, Zeolite X, Zeolite Y and mixtures thereof.

2. A polish composition as claimed in claim 1, characterized in that the amount of the silicon-derived compound is correlated to the selection of the crystalline aluminosilicate material such that the amount is the minimum effective amount.

3. A polish composition as claimed in claim 1 or 2, characterized in that the aluminosilicate is Zeolite 4A.

4. A polish composition as claimed in claim 1 or 2, characterized in that the aluminosilicate is Zeolite 13X.

5. A polish composition as claimed in any of claims 1 or 4, characterized in that the silicon-derived compound is present in an amount between 0.1 and 10 percent by weight.

6. A polish composition as claimed in claim 5, characterized in that the silicon-derived compound is present in an amount between 1 and 6 percent by weight.

7. A polish composition as claimed in claim 5, characterized in that the silicon derived compound is present in an amount between 0.1 and 2 percent by weight.

8. A polish composition as claimed in any one of claims 1 to 7, characterized in that the aluminosilicate is present in an amount between 0.1 percent and 30 percent by weight.

9. A polish composition as claimed in claim 8, characterized in that the aluminosilicate is present in an amount between 0.5 and 20 percent by weight.

## Patentansprüche

1. Polierzusammensetzung mit einer bekannten siliziumhaltigen Verbindung, einem Alumosilikat als Schleifmittel und anderen herkömmlichen Additiven, dadurch gekennzeichnet, daß das Alumosilikat ausgewählt wird aus Zeolith A, Zeolith X, Zeolith Y und deren Mischungen.

2. Polierzusammensetzung nach Anspruch 1, dadurch gekennzeichnet, daß die Menge der siliziumhaltigen Verbindung so mit der Auswahl des Kristallinen Alumosilikats korreliert wird, das sich für diese eine minimale effektive Menge ergibt.

3. Polierzusammensetzung nach Anspruch 1 oder 2, dadurch gekennzeichnet, daß das Alumosilikat Zeolith 4A ist.

4. Polierzusammensetzung nach Anspruch 1 oder 2, dadurch gekennzeichnet, daß das Alumosilikat Zeolith 13X ist.

5. Polierzusammensetzung nach einem der Ansprüche 1 bis 4, dadurch gekennzeichnet, daß die siliziumhaltige Verbindung in einer Menge zwischen 0,1 und 10 Gew.% vorliegt.

6. Polierzusammensetzung nach Anspruch 5, dadurch gekennzeichnet, daß die siliziumhaltige Verbindung in einer Menge zwischen 1 und 6 Gew.% vorliegt.

7. Polierzusammensetzung nach Anspruch 5, dadurch gekennzeichnet, daß die siliziumhaltige Verbindung in einer Menge zwischen 0,1 und 2 Gew.% vorliegt.

8. Polierzusammensetzung nach einem der Ansprüche 1 bis 7, dadurch gekennzeichnet, daß das Aluminosilikat in einer Menge zwischen 0,1 und 30 Gew.% vorliegt.

9. Polierzusammensetzung nach Anspruch 8, dadurch gekennzeichnet, daß das Aluminosilikat in einer Menge zwischen 0,5 und 20 Gew.% vorliegt.

## Revendications

1. Composition de lustrage, comprenant un composé connu dérivé du silicium, un aluminosilicate comme matière abrasive et d'autres additifs usuels, caractérisée en ce que l'aluminosilicate est choisi entre la zéolite A, la zéolite X, la zéolite Y et leurs mélanges.

2. Composition de lustrage suivant la revendication 1, caractérisée en ce que la quantité de composé dérivé du silicium est subordonnée au choix de l'aluminosilicate cristallin, de manière que la quantité soit la quantité minimale efficace.

3. Composition de lustrage suivant la revendication 1 ou 2, caractérisée en ce que l'aluminosilicate est la zéolite 4A.

4. Composition de lustrage suivant la revendication 1 ou 2, caractérisée en ce que l'aluminosilicate est la zéolite 13X.

5. Composition de lustrage suivant l'une quelconque des revendications 1 à 4, caractérisée en ce que le composé dérivé du silicium est présent en proportion comprise entre 0,1 et 10% en poids.

6. Composition de lustrage suivant la revendication 5, caractérisée en ce que le composé dérivé du silicium est présent en proportion comprise entre 1 et 6% en poids.

7. Composition de lustrage suivant la revendication 5, caractérisée en ce que le composé dérivé du silicum est présent en proportion comprise entre 0,1 et 2% en poids.

8. Composition de lustrage suivant l'une quelconque des revendications 1 à 7, caractérisée en ce que l'aluminosilicate est présent en une quantité comprise entre 0,1 et 30% en poids.

9. Composition de lustrage suivant la revendication 8, caractérisée en ce que l'aluminosilicate est présent en quantité comprise entre 0,5 et 20% en poids.